# EUROPEAN PATENT SPECIFICATION

(11) **EP 3 936 914 B1**
(45) Date of publication and mention of the grant of the patent: **18.12.2024**
(21) Application number: 21179177.7
(22) Date of filing: 14.06.2021
(51) Int. Cl.: G02B 6/44, H02G 3/08, H02B 1/38

(54) **BOX FOR CABLES**
GEHÄUSE FÜR KABEL
BOÎTE POUR CÂBLES

(30) Priority: 26.06.2020 IT 202000015466
(43) Date of publication of application: 12.01.2022
(73) Proprietor: Prysmian S.p.A., 20126 Milan (IT)
(72) Inventor: PADDICK, Nathan, Southampton (GB)
(74) Representative: Porta & Consulenti Associati S.p.A.

(56) References cited:
- WO-A1-2019/241347
- US-A1- 2017 090 138

## Description

### Technical field

The present invention relates to the field of apparatuses for the installation and maintenance of electrical cables and optical fibers. In particular, the present invention relates to a box for cables for housing connection between optical cables and/or electric cables.

### Background art

Boxes for cables are mounted in various residential, commercial, and industrial locations depending on the particular application. Electrical and/or optical cables, optical splitters, splice trays, electrical junctions, optical junctions are commonly supplied to such boxes and are used for connecting an electric and/or optical cable to one or more electric and/or optical cables or fibers.

As an example, box for cables are used in optical networks. Generally called FTTX, such as FTTH (Fiber To The Home), FTTP (Fiber To The Premises), FTTB (Fiber To The Building), FTTC (Fiber To The Cabinet) are optical access networks providing a number of end customers with broadband communication services from operators, i.e. with services requiring data transmission at a very high rate, for example of some Mbit/s.

A FTTX network comprises a central office which is connected with one or more street cabinets and/or optical distribution boxes, through an optical cable commonly known as network cable.

To be able to properly identify and to splice a particular optical fiber among hundreds of optical fibres, splice trays can be arranged in boxes for cables for organizing, storing, splicing and retaining spliced optical fiber splices.

Therefore boxes for cables should be easy to install and should allow an easy access to facilitate and expedite the operation of personnel and technicians specialized in electrical and/or optical networks.

To this end, typically a box comprises a containment portion, wherein electrical or optical components are contained, one or more openings, for allowing the cables to enter and to leave the containment portion, and a removable lid, for allowing access into the containment portion. The lid closes the containment portion and, in case of outdoor application the lid seals the containment portion with a reliable moisture barrier, so that the box for cables is waterproof and dust proof to ensure the cables connection not be damaged by hostile environment.

Boxes for cables with removable lid can comprise screws or bolts that connect the lid to the containment portion or can comprise a dismountable hinge assembly for allowing the lid to rotate from a closed position to an open position and for allowing to completely remove the lid from the containment portion by at least dismounting the hinge assembly.

An example of box for cables with dismountable hinge assembly is disclosed by document US 6,000,550, wherein the hinge comprises two complementary shaped parts which are integral to halves of a closable container. The first part includes a pair of parallel arms which project outwardly from one of the container sections. The arms include receiving portions which include axially aligned opposing partial sockets or cavities which are configured to rotatingly receive pintle or hinge pin ends. The first hinge part also includes a dual function tab. The tab is positioned between, and generally coextensive with the parallel arms of the first part of the hinge. The tab performs two functions, the first during assembly, the second after assembly. The first function of the tab is to deflect the body of the pintle as it passes thereby along the slot defined by opposed channels in the receiving portions of the arms. The second function of the tab is to retain the pintle ends within the partial sockets of the receiving portions of the arms after the pintle has passed the tab and returned to its normal undeflected state.

Another example of box for cables with dismountable hinge assembly is disclosed by document US 6,099,097, wherein the hinge comprises a pin and a snap-acting gripping assembly. The snap-acting gripping assembly comprises a pair of laterally spaced-apart, resilient, gripping fingers formed with an inwardly inclined or curved inner end designed for capturing the pin. Finger ends provide a narrowed neck or passageway which is smaller than the diameter of the pin and which requires resilient displacement of fingers in order for the pin to snap into the passageway so that the fingers firmly resiliently retain the pin.

Another example of box for cables with dismountable hinge assembly is disclosed by document US 2017/090138 A1.

### Summary of the invention

The Applicant has observed that when a technician accesses a box for cables for performing maintenance operations or for installing the box for cable, the few are the components the technician has to deal with, the simpler and the quicker the operation is.

Indeed, as an example, the Applicant has observed that in case of lid connected to the containment portion of the box through screws or bolts, the technician needs to unscrew the lid from the containment portion, remove and save the screws and the lid, and then reposition and screw the lid on the containment portion. During all these phases, the technician can lose one or more screws, can damage the lid and, any case, needs to perform a number time consuming operations.

The Applicant has observed that boxes for cables having a dismountable hinge assembly, as for example the one disclosed by US 6,000,550, allow to simply access to the containment portion of the box by rotating the lid around the hinge axis, so requiring a few number of operation. In these types of box for cables, the lid needs to be completely removed and recoupled just in few cases, for example the lid needs to be coupled to the containment portion just during the box installation.

The Applicant has observed that boxes for cables having a dismountable hinge assembly that requires elastic deformation of the pintle can be exposed to failure even during the installation due to the possibility to break the pintle in case it is over bent.

The Applicant has observed that boxes for cables having a snap-acting gripping assembly can be exposed to failure too due to the possible break of the fingers especially during the hinge disassembling. In fact, during disassembling the fingers need to be displaced for being decoupled from the pin and, in case the fingers are over-displaced, the fingers can easily crack.

The Applicant has observed that a dismountable hinge assembly that merely requires a rectilinear translation of the pintle into a holed receiving arm for rotatably connecting the lid to the containment portion of the box is prevented from any possible damage to the hinge assembly during its mounting and dismounting.

However, the Applicant has observed that such a box for cable would present just one possible orientation for being properly installed. In fact, in case the pintle is connected to the lid and the receiving arm is connected to the containment portion, the pintle needs to be positioned vertically above the holed receiving arm in order to prevent (once the lid is in the open position) the pintle from slipping off from the receiving arm due to the weight of the lid. In case the pintle is connected to the containment portion and the receiving arm is connected to the lid, the pintle needs to be positioned vertically below the holed receiving arm in order to prevent (once the lid is in the open position) the receiving arm from slipping off from the pintle due to the weight of the lid. Again, in case the pintle is positioned horizontally aligned to the receiving arm, any horizontal force applied to lid in the open position would unplug the pintle form the receiving arm.

The Applicant has thus tackled the problem of providing a box for cables that can be safely mounted and accessed with few and simply operations and that can properly work irrespective from its mounting orientation.

The Applicant has also tackled the problem of providing said box for cables minimizing the number of separate components to be mounted, reducing the risk of component lost during installation and further decreasing the complexity of the installation itself.

The Applicant has observed that, by providing a hinge assembly having two hinge portions rotating to each other along a pintle axis wherein the hinge assembly only needs a translation of one of the two hinge portions along a pintle axis for being assembled, the hinge assembly can remain in its assembled configuration when a stop mechanism acts against any axial movement of one hinge portion with respect to the other hinge portion.

The Applicant has observed that by proving the stop mechanism with at least two positions, wherein a first position allows a relative translation of one hinge portion with respect to the other hinge portion and wherein a second position prevents the two hinge portions from translating to each other along the pintle axis, the hinge can be assembled with the stop mechanism in the first position and then the stop mechanism can be switched in the second position.

Consistently, the present invention relates to a box for cables comprising a first box portion and a second box portion distinct from each other that, in combination, define a closed space;
a hinge assembly, having a hinge axis parallel to an axial direction, that hinges the first box portion to the second box portion so that said closed space is accessible by a relative rotation of the first box portion and the second box portion around said hinge axis;
wherein the hinge assembly comprises a tab integral with the first box portion, a first hinge portion integral with the second box portion and a second hinge portion integral with the first box portion;
wherein the tab comprises an appendage elastically deformable having a free end, an activating part of the tab configured for being operated by a user being provided at said free end for elastically deforming the appendage;
wherein the first hinge portion and the second hinge portion are rotatably connected to each other along the hinge axis through a pintle;
wherein the tab, the first hinge portion and the second hinge portion succeed along the axial direction with the first hinge portion positioned between the tab and the second hinge portion;
wherein the tab is movable between a rest position, wherein the tab prevents the first hinge portion from sliding along said axial direction relative to the second hinge portion and wherein the appendage is in an undeformed condition, and a release position, wherein the first hinge portion is slidable along said axial direction relative to the second hinge portion and wherein the appendage in a elastically deformed condition;
wherein the tab is configured for being moved from the rest position to the release position by operating the activating part;
wherein during the elastic deformation of the appendage, the free end substantially rotates around a deformation axis lying substantially parallel to the hinge axis.

The pintle connects the first hinge portion to the second hinge portion so that the first hinge portion and the second hinge portion rotates one respect to the other. Since the first hinge portion is integral with the second box portion and the second hinge portion is integral with the first box portion, the first and second box portions can rotates relative to each other so providing a openable and closable box.

By proving the first hinge portion adjacent, along the axial direction, to the second hinge portion, the first hinge portion cannot slide towards the second hinge portion (the two hinge portions being integral with different portions of the box) and the second hinge portion cannot slide towards the first hinge portion.

The Applicant has realized that by providing the hinge assembly with a tab integral with the first box portion and positioned adjacent to the first hinge portion on the side opposite to the second hinge portion (so that the tab, the first hinge portion and the second hinge portion succeed along the axial direction with the first hinge portion positioned between the tab and the second hinge portion), the first hinge portion is prevented from sliding away from the second hinge portion.

This allows to provide a box for cable having a hinge assembly that properly works irrespective from the orientation of the box (and therefore of the hinge axis) once the box is installed.

The Applicant has further realized that by providing the tab movable from a rest position, wherein it prevents any sliding movement of the first hinge portion relative to the second hinge portion, to a release position wherein it no longer prevents the first hinge portion to slide relative to the second hinge portion, the hinge assembly can be assembled and disassembled by merely moving the tab from the rest to the release position.

The Applicant has realized that by providing the tab in the rest position with the appendage in an undeformed condition and by providing the tab in the release position with the appendage in a elastically deformed condition, the rest position of the tab is a stable position. The stable position of the rest position is maintained unless an actuation force for elastically deforming the appendage is exerted on the tab. Such an actuation force causes a movement of the tab in the release position that is maintained provided that the actuation force is maintained on the appendage. Thus, the release position is an unstable position that can be reach only by applying and by maintaining an actuation force on the appendage of the tab. This allows to prevent the hinge assembly from being accidentally dismounted.

The Applicant has further realized that allowing the free end of the tab to substantially rotate around a deformation axis lying substantially parallel to the hinge axis during the elastic deformation of the appendage, the extent in an axial direction of the tab can be arranged independently from the extent in the same axial direction of the pintle. Indeed, during the elastic deformation of the appendage of the tab, the tab is in the release position and the first hinge portion can slide relative to the second hinge portion irrespective from the extent in the axial direction of the tab. This allows to provide for a tab of reduced dimension in the axial direction so minimizing or reducing the axial extent of the hinge assembly.

Throughout this description and in the following claims, the expressions "optical fiber" is used to indicate an elongated optical element comprising an optical waveguide, constituted by an optically transmissive core, surrounded by a cladding. The optical waveguide is preferably covered by at least one protective coating layer. Two protective coating layers are preferably provided: a first coating layer (primary coating) is in direct contact with the optical waveguide, while a second coating layer (secondary coating) covers the primary coating. In addition, a buffer layer may cover the optical fiber. The buffer layer may be substantially in contact with the secondary coating (tight buffer) or it may consist of a small tube housing one or more optical fibers (loose buffer).

Throughout this description and in the following claims, the expressions "optical cable" is used to indicate a one or more optical fibers, possibly surrounded by strengthening fibres, disposed within a cable jacket.

Throughout this description and in the following claims, the expressions "axial" and "axially" refer to a direction substantially coinciding with or substantially parallel to a rotation axis of the pintle of the hinge assembly.

Throughout this description and in the following claims, the expressions "radial" and "radially" refer to a direction lying in a plane substantially perpendicular to the rotation axis of the pintle and passing through such a rotation axis.

Throughout this description and in the following claims, the expressions "radially inner" and "radially outer" refer to a position respectively closer to and further from the rotation axis of the pintle.

Throughout this description and in the following claims, the expression "circumferential" refers to a direction along the rotation direction of the pintle.

Throughout this description and in the following claims, the expressions "elastic deformation" refers to the ability of a body to change its shape under a force and to return to its original shape when that force is removed.

The present disclosure can be implemented according to one or more of the following embodiments, optionally combined together.

In some embodiments, said first hinge portion presents a predetermined extent in a radial direction; a projection in the axial direction of the radial extent of the first hinge portion passes through the tab in the rest position and interferes with the tab, and said projection in the axial direction of the radial extent of the first hinge portion does not pass through the tab in the release position and does not interfere with the tab.

By letting the tab in the rest position to interfere with a projection in the axial direction of the radial extent of the first hinge portion, the tab stops any sliding movement of the first hinge portion directed toward the tab and away from the second hinge portion. This prevents the hinge assembly from being dismounted.

By letting the tab in the release position not to interfere with a projection in the axial direction of the radial extent of the first hinge portion, the first hinge portion can slide beyond the tab and away from the second hinge portion. This allows the hinge assembly to be dismounted.

In some embodiments, the tab presents a length in an axial direction that is less than a length of the pintle measured along an axial direction.

The length of the pintle and the length of the tab in an axial direction are measured along a direction parallel to the pintle axis.

The length of the pintle and the length of the tab in an axial direction correspond respectively to the maximum extent in the axial direction of the pintle and of the tab.

In some embodiments, the length of the tab in an axial direction is less than half of the length of the pintle in an axial direction.

In some embodiments, the tab moves from the rest position to the release position along a direction substantially perpendicular to the rotation axis of the pintle.

In some embodiments, during the elastic deformation of the appendage, the free end moves away from the hinge axis along a radial direction having a first component perpendicular to the hinge axis and a second component perpendicular to said first component and to the hinge axis.

In some embodiments, the tab, when in the rest position, protrudes from the first box portion.

The tab comprises an activating part configured for being operated by a user for moving the tab from the rest position to the release position.

The activating part allows a user to exert the cited actuation force for elastically deforming the appendage of the tab. The activating part is integral with the tab.

In some embodiments, the tab is spaced apart from the first hinge portion by a distance measured along an axial direction; said distance being comprised between 0,1 millimetres and the length of the pintle, measured along an axial direction, reduced by a predetermined amount.

This allows the tab in the rest position to prevent the pintle from disengaging from the first hinge portion (in case the pintle is provided on the second hinge portion) or the pintle from disengaging from the second hinge portion (in case the pintle is provided on the first hinge portion).

In some embodiments, said predetermined amount is greater than 0,1 millimetres, for example greater that 1 millimetre.

In some embodiments, said first hinge portion comprises at least one arm having a through hole for rotatably receiving said pintle.

In some embodiments, the arm of the first hinge portion circumferentially completely surrounds the through hole, so that the pintle is completely circumferentially surrounded by the arm at the through hole. In other words, there is not any radial aperture in the arm in correspondence of the through hole.

In some embodiments, said second hinge portion comprises a supporting frame for said pintle; said pintle being connected to said supporting frame.

This allows the pintle to be rotatably inserted in the through hole and to be axially retained at the supporting frame of the second hinge portion. The pintle is rotatably retained at the supporting frame of the second hinge portion.

In some embodiments, said pintle is integral with said supporting frame. As the supporting frame is integral with the second hinge portion and the second hinge portion is integral with the first box portion, the pintle is integral with the first box portion.

In alternative embodiments, said second hinge portion comprises at least one arm having a through hole for rotatably receiving said pintle.

In these alternative embodiments, the arm of the second hinge portion circumferentially completely surrounds the through hole, so that the pintle is completely circumferentially surrounded by the arm at the through hole.

In these alternative embodiments, said first hinge portion comprises a supporting frame for said pintle; said pintle being connected to said supporting frame.

This allows the pintle to be rotatably inserted in the through hole and to be axially retained at the supporting frame of the first hinge portion. The pintle is rotatably retained at the supporting frame of the first hinge portion.

In some embodiments, said pintle is integral with said supporting frame.

In some embodiments, said first box portion is a containment framework. The containment framework is configured for accommodating one or more of: electric cables, optical cables, optical fibers, junctions between two or more electrical cables, junctions between two or more optical cables, junctions between two or more optical fibers, splice trays, optical splitters.

In some embodiments, said second box portion is a lid.

The lid close the containment framework to protect the component accommodated into the containment framework. The lid is openable by rotating the lid around the rotation axis so as to allow accessing the component accommodated into the containment framework.

In some embodiments, said first box portion, said second box portion and said hinge assembly are made from the same plastic material.

In some embodiments, the first hinge portion and the second box portion are made in one piece by injection moulding.

In some embodiments, the second hinge portion, the first box portion and the tab are made in one piece by injection moulding. In the embodiments where the pintle is integral with the second hinge portion, the pintle is made in one piece with the first box portion by injection moulding too.

In some embodiments, said containment framework comprises at least two openings provided on opposite walls of the containment framework. Said two opposite walls are provided on walls of the containment framework substantially parallel to the rotation axis.

In some embodiments, the box for cables comprises a further hinge assembly wherein the further hinge assembly lacks the relative tab.

The Applicant has realized that by providing the tab that, in the rest position, prevents axial movement of the first hinge portion relative to the second hinge portion of the hinge assembly, the first and second hinge portion of the further hinge assembly are prevented from axially moving to each other too.

### Brief description of the drawings

The present invention will be now described in more detail hereinafter with reference to the accompanying drawings, in which some, but not all embodiments of the invention are shown.

Drawings illustrating the embodiments are not to scale representations.

For the purpose of the present description and of the appended claims, use of the "a" or "an" are employed to describe elements and components of the invention. This is done merely for convenience and to give a general sense of the invention. This description should be read to include one or at least one and the singular also includes the plural unless it is obvious that it is meant otherwise.
- Figure 1 shows a schematic side view of a box for cables according to the present invention in a closed configuration;
- Figure 2 shows a schematic side view of the box for cables of Figure 1 in a opened configuration;
- Figure 3 shows a schematic first perspective view of a portion of the box for cables of Figure 1;
- Figure 4 shows a schematic second perspective view of the portion of the box for cables of Figure 3;
- Figure 5 shows a schematic lateral view of the portion of the box for cables of Figure 3 in a first condition;
- Figure 6 shows a schematic lateral view of the portion of the box for cables of Figure 3 in a second condition;
- Figure 7 shows a schematic side view of the portion of the box for cables of Figure 5; and
- Figure 8 shows a schematic side view of the portion of the box for cables of Figure 6.

### Detailed description

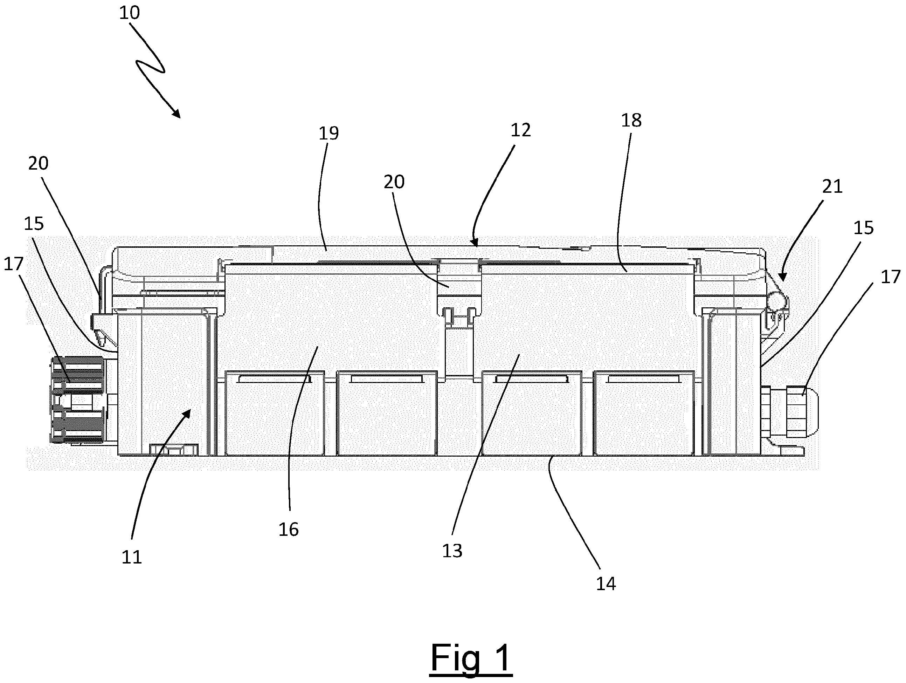

A box for cables according to the present invention is indicated with the reference number 10 in Figure 1.

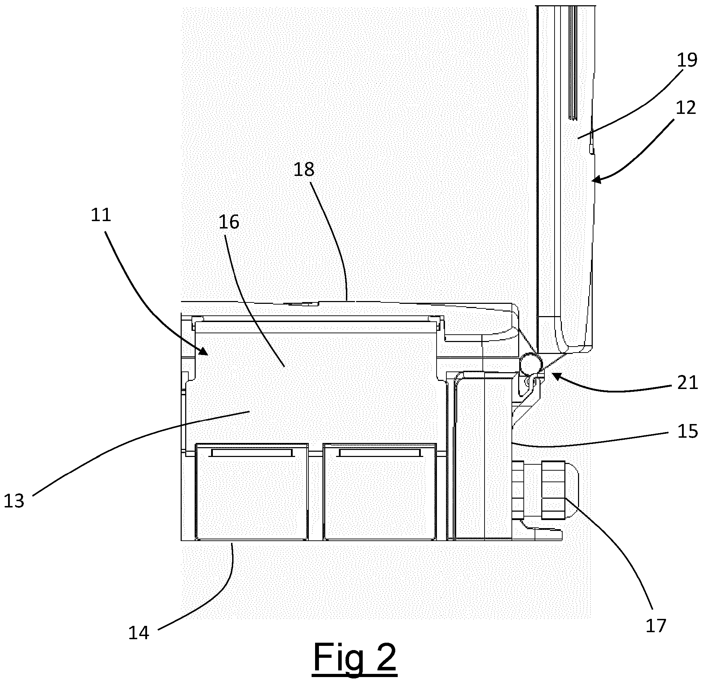

The box for cables 10 comprises a first box portion 11 and a second box portion 12, which are illustrated in a first operative condition in Figure 1 and in a second operative condition in Figure 2.

In the embodiment shown in Figure 1 and Figure 2, the first box portion 11 is a containment framework 13 suitable for example for being used in FTTH network. The containment framework 13 can also be used for accommodating electric cables, optical cables, optical fibers, junctions between two or more electrical cables, junctions between two or more optical cables, junctions between two or more optical fibers, splice trays and/or optical splitters, depending on the type of cables to be used.

The containment framework 13 is intended to be arranged on any other outdoor mounting surface or on any indoor mounting surface.

The containment framework 13 can have a substantially parallelepiped shape and comprises a base wall 14 which can be designed to be mounted on a mounting surface by using suitable screws, plugs, anchors or similar (not shown).

A first couple of lateral walls 15 and a second couple of lateral walls 16 are connected to the base wall 14. A first lateral wall of the first couple of lateral walls 15 is opposite to a second lateral wall of the first couple of lateral walls 15, as well as a first lateral wall of the second couple of lateral walls 16 is opposite to the second lateral wall of the second couple of lateral walls.

The first couple of lateral walls 15 comprises ports 17 for allowing one or more electrical cables or one or more optical cables to enter and to exit from the containment framework 13. Preferably at least one port 17 is an admittance port provided on the first lateral wall of the first couple of lateral walls 15 and at least one port 17 is an exit port provided on the second lateral wall of the first couple of lateral walls 15.

As an example, an entering cable can be a riser cable and exiting cables can be drop cables configured for reaching an apartment or for serving a whole floor of a building.

Any case, independently from the specific cables entering and exiting from the containment framework 13, the containment framework 13 comprises a top portion 18 for accessing to an interior space where cables, junctions and/or cable trays are arranged.

In the embodiment shown in Figures 1 and 2, the second box portion 12 is a lid 19 for closing the containment framework 13.

In alternative embodiments, the first box portion 11 can be the lid 19 and the second box portion 12 can be the containment framework 13.

The lid 19 is hinged to the containment framework 13 for being movable between a closed condition (illustrated in figure 1) and an open condition (illustrated in Figure 2). The lid 19 is arranged at the top portion of the containment framework 13.

In the embodiment shown in Figures 1 and 2, a snap fit closings 20 allows the lid 19 to be held to the containment framework 13 in the closed condition. The snap fit closing 20 is arranged between the lid 19 and at least one wall of the second couple of lateral walls 16.

In order to ensure that moisture, water, dust, or similar cannot enter the containment framework 13 when in the closed condition, the containment framework 13 and/or the lid 19 comprises sealing members, as for example gasket seals, that seal the lid to the first couple of lateral walls 15 and to the second couple of lateral walls 16 of the containment framework 13.

The lid 19 and the containment framework 13 are hinged to each other through a hinge assembly 21.

The hinge assembly 21 comprises a first hinge portion 22, a second hinge portion 23 and a tab 24.

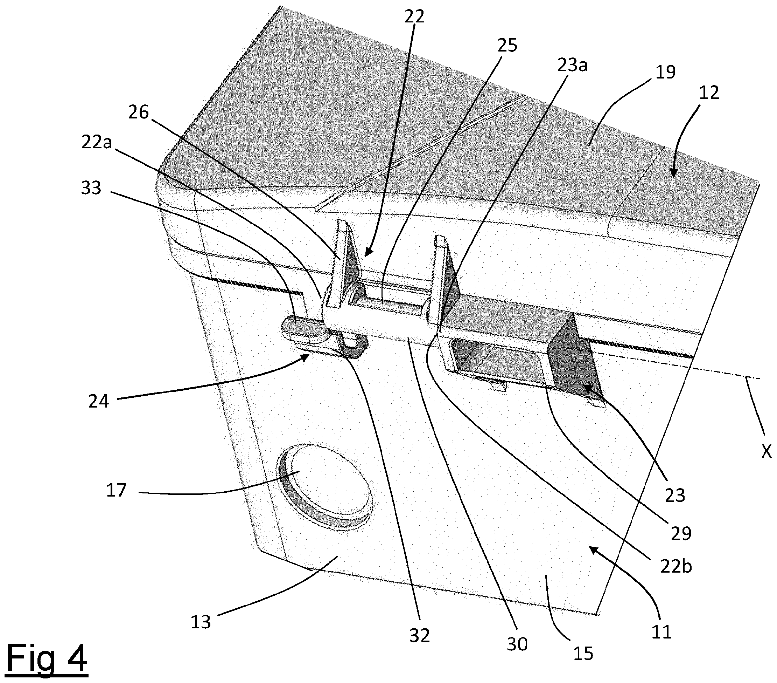

As illustrated in Figure 4, according to the claimed invention, the first hinge portion 22 is integral with the second box portion 12 (that in the embodiment of Figures 1 and 2 is the lid 19) and the second hinge portion 23 is integral with the first box portion 11 (that in the embodiment of Figures 1 and 2 is the containment framework 13). In other words, the first hinge portion 22 is made in one piece with the second box portion 12 and the second hinge portion 23 is made in one piece with the first box portion 11.

The tab 24 is integral with the first box portion 11 (that in the preferred embodiment is the containment framework 13). In other words, the tab 24 is made in one piece with the first box portion 11.

The first hinge portion 22 and the second hinge portion 23 are rotatably coupled to each other around a hinge axis or rotation axis X so that the lid 19 can rotate relative to the containment framework 13 around the hinge axis X between the open and close conditions.

To this end, a pintle 25 is operative between the first hinge portion 22 and the second hinge portion 23. The pintle 25 is arranged in an axial direction so that the hinge axis X passes through the pintle 25.

The first hinge portion 22 is positioned, along an axial direction, between the tab 24 and the second hinge portion 23. As illustrated in Figure 4, the tab 24 is adjacent to the first hinge portion 22 at a first axial end 22a of the first hinge portion 22 opposite to a second axial end 22b of the first hinge portion 22 facing the second hinge portion 23.

The second hinge portion 23 comprises a first axial end 23a adjacent to the first hinge portion 22 at the second axial end 22b thereof.

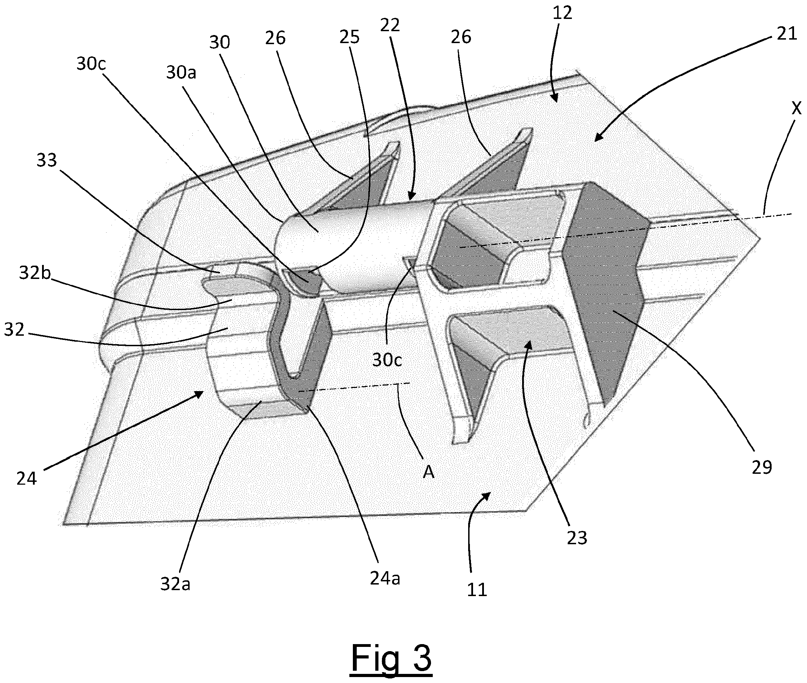

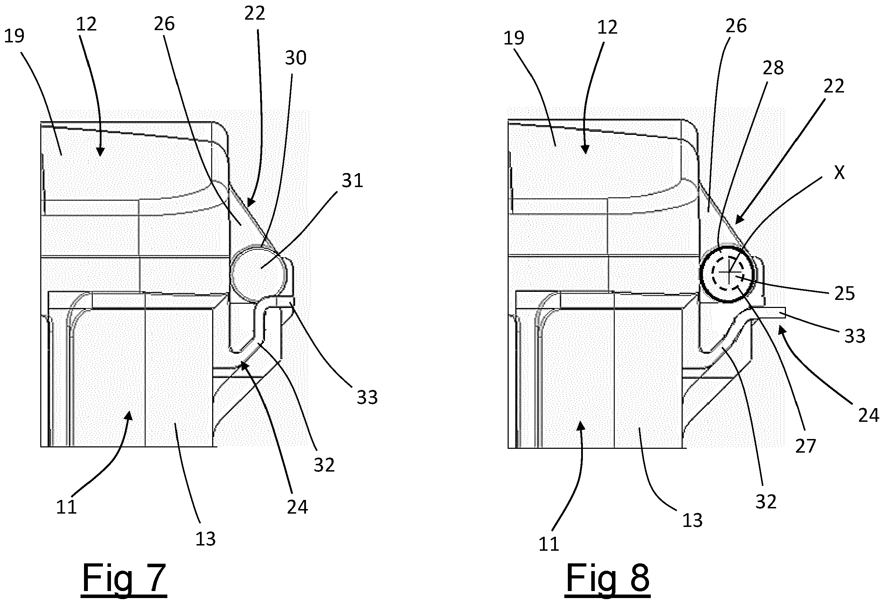

In the embodiment shown in Figures 3 to 8, the first hinge portion 22 comprises at least one arm 26 integral with the lid 19. The arm 26 has a through hole 27 (indicated in dashed line in Figure 8) presenting a hole axis aligned along the rotation axis X. The hole axis is a symmetry axis of the through hole 27. In the embodiment shown in Figures 3 to 8, the first hinge portion 22 comprises two arms 26 each of which is provided with a through hole 27. One of the two arm 26 is positioned at the first axial end 22a of the first hinge portion 22 and the other arm 26 is positioned at the second axial end 22b of the first hinge portion 22. The two arms 26 are parallel to each other so that the through holes 27 are aligned along an axial direction. Each through hole 27 is configured for rotatably receiving the pintle 25.

Each through hole 27 is circumferentially surrounded by an annular portion 28 of the respective arm 26. The annular portion 28 is designed for preventing the pintle 25 from radially disengaging from the arm, namely for preventing the pintle 25 from radially exiting the through hole 27.

In the embodiment shown in Figures 3 to 8, the second hinge portion 23 comprises a supporting frame 29 for the pintle 25 integral with the containment framework 13. The supporting frame 29 holds the pintle 25 in a stable position which is aligned with the rotation axis X. The pintle 25 emerges from the first axial end of the second hinge portion 23 and is axially directed towards the arms 26 of the first hinge portion 22.

In the embodiment shown in Figures 3 to 8, the pintle is integral with the supporting frame 29, so that the pintle 25 and the supporting frame 29 are made in one piece.

A cover element 30 for the pintle 25 axially extends between the two arms 26 of the first hinge portion 22, so that the pintle 25 cannot be directly accessed. The cover element 30 has a substantially cylindrical shape and partially circumferentially surrounds the pintle 25. The cover element 30 comprises a disc portion 31 (see figure 7) provided at a first end portion 30a distal from a second end portion 30b adjacent to the second hinge portion 23. The disc portion 31 covers the through hole 27 provided on the arm 26 positioned at the first axial end 22a of the first hinge portion 22, so as to prevent the pintle 25 from axial extending beyond the cover element 30.

The cover element 30 comprises two slots 30c (see Figure 3) for allowing the cover element 30 to partially embrace the two arms 26. Each slot 30c extends in a radial direction and is parallel to the respective arm 26, and the latter is inserted into the slot 30c.

The cover element 30 can be integral with the first hinge portion 22 or it can be a separate component mounted in position during the hinge assembling.

The tab 24 prevents the first hinge portion 22 and the second hinge portion 23 from axially moving relative to each other when the tab 24 is in a rest position. Moreover, the tab 24 does not prevent the first hinge portion 22 and the second hinge portion 23 from axially moving relative to each other when the tab 24 is in a release position.

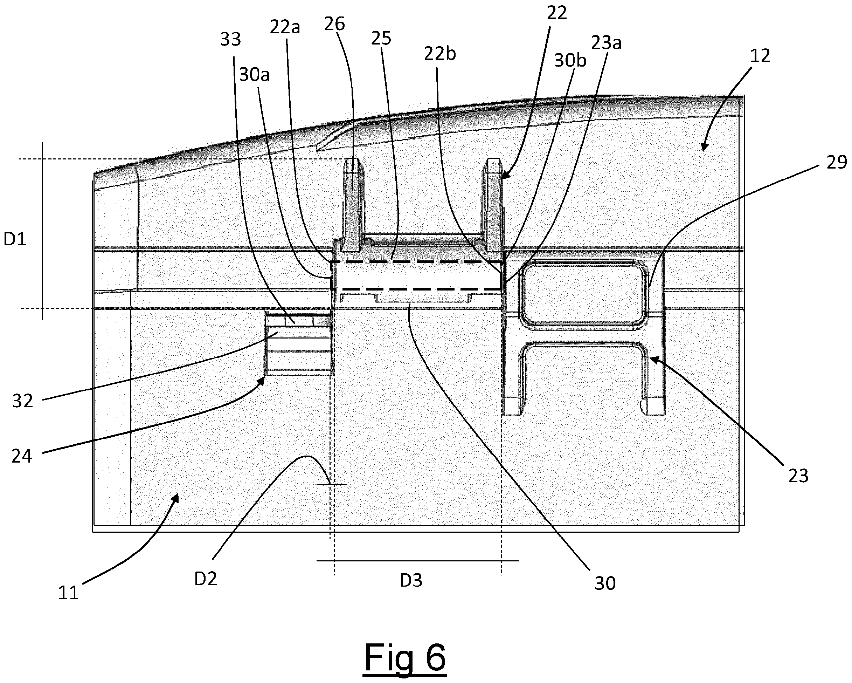

As illustrated in Figures 6 and 7, the first hinge portion 22 presents an extent D1 in a radial direction that corresponds to the length of the first hinge portion 22 measured in a direction perpendicular to the rotation axis X. In the preferred embodiment, the radial extent D1 is the length of the arm 26 positioned at the first axial end 22a of the first hinge portion 22.

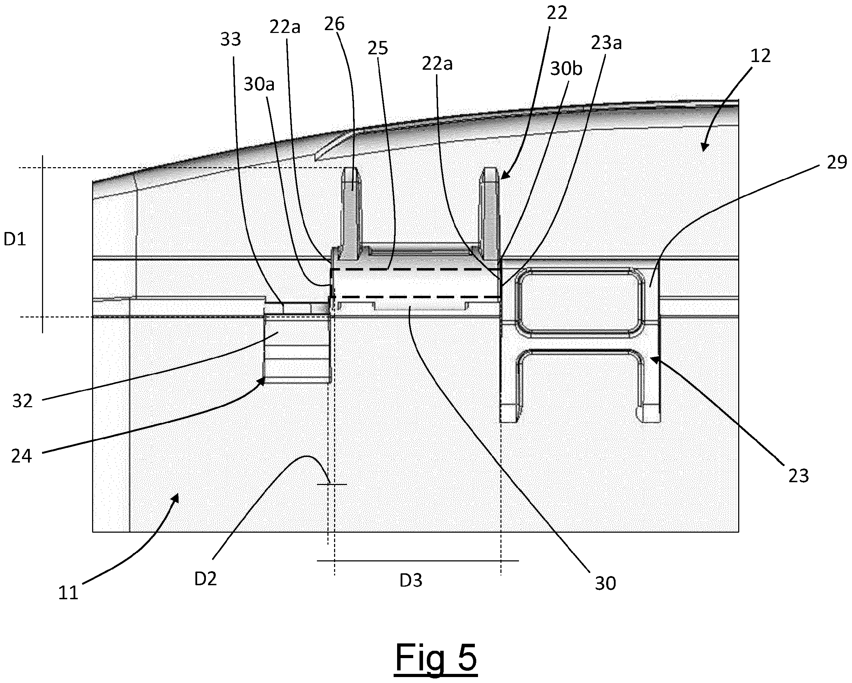

The tab 24, when in rest position, intersects an ideal projection along the axial direction of the radial extent D1 of the first hinge portion 22, as schematically illustrated in Figure 5. In other words, the tab 24 in the rest position stops a possible axial movement of the first hinge portion 22 by mechanically interfering with the first axial end 22a of the first hinge portion 22. The tab 24 in the rest position stops an axial movement of the first hinge portion 22 that would cause the first hinge portion 22 to slip off from the pintle 25.

To this end, the tab 24 is spaced apart from the first axial end 22a of the first hinge portion 22 by a distance D2 measured along an axial direction. The distance D2 is comprised between 0,1 millimetres and a length lower than the length D3 of the pintle 25 (where the length D3 is measured along an axial direction too), as illustrated in Figure 5. In particular, the distance D2 can be comprised between 0,1 and 2,0 millimetres, namely the tab 24 is very close or substantially aligned (in an axial direction) to the first axial end 22a of the first hinge portion 22. Said length lower than the length D3 of the pintle 25 can be the length D3 minus an amount greater that 0,1 millimetres, for example greater that 0,5 millimetres, for example greater than 1 millimetres.

The tab 24, when in release position, does not intersect an ideal projection along the axial direction of the radial extent D1 of the first hinge portion 22, as schematically illustrated in Figure 6. In other words, the tab 24 in the release position fails to stops axial movements of the first hinge portion 22.

The tab 24 is movable from the rest to the release position by elastically deforming the tab 24.

In the embodiment shown in Figures 3 to 8, the tab 24 comprises an appendage 32 that is elastically deformable under a force applied by a user. The appendage 32 has a curved shape and comprises a fixed end 32a connected to a non-deformable portion 24a of the tab 24 or directly connected to the first box portion 11. The appendage 32 further comprises a free end 32b distal from the fixed end 32a that is spaced apart from the non-deformable portion 24a of the tab 24 or from the first box portion 11 in case the appendage 32 is directly connected to the first box portion 11.

When the appendage 32 is in the undeformed condition, at least the free end 32b intersects an ideal projection along the axial direction of the radial extent D1 of the first hinge portion 22 so preventing the first hinge portion 22 from slipping off from the pintle 24 (as schematically illustrated in Figure 7).

When the appendage 32 is in the elastically deformed condition, the free end 32b and the appendage 32 do not intersects an ideal projection along the axial direction of the radial extent D1 of the first hinge portion 22 (as schematically illustrated in Figure 8). During the elastic deformation of the appendage 32, the free end 32b substantially rotates around a deformation axis A lying substantially parallel to the hinge axis X. This rotation moves away the appendage 32 from the ideal projection along the axial direction of the radial extent D1 of the first hinge portion 22, so allowing the first hinge portion 22 to move in axial direction. The deformation axis A is offset from the hinge axis X.

During the elastic deformation of the appendage 32, the free end 32b moves away from the hinge axis X along a radial direction having a first component perpendicular to the hinge axis X and a second component perpendicular to said first component and to the hinge axis X.

Therefore, when the tab 24 is in the rest position the appendage 32 is in the undeformed condition (as shown in Figures 5 and 7) and when the tab 24 is in the release position the appendage 32 is in the elastically deformed condition (as shown in Figures 6 and 8).

The tab 24 comprises an activating part 33 configured for being operated by a user for moving the tab 24 from the rest position to the release position and thus for operating the appendage 32 from the undeformed condition to the elastically deformed condition. As soon as the user ends applying a force on the activating part 33 that elastically deforms the appendage 32 and move the tab 24 in the release position, the appendage 32 returns in the undeformed condition and the tab 24 reaches the rest position.

The activating part 33 is provided at the free end 32b of the appendage 32. In the preferred embodiment, the activating part 33 is substantially flat and is oriented substantially perpendicular to a portion of the appendage 32 adjacent to the free end 32b.

All the components of the tab, namely the appendage 32, the non-deformable portion 24a and the activating part 33 are made in one piece to each other and are made in one piece with the first box portion 11.

The tab 24 when in the rest position protrudes from the first box portion 11. In particular, the tab 24 when in the rest position protrudes from the first box portion 11 on an opposite side from an interior space where cables, junctions and/or cable trays are arranged.

The tab 24 when in the release position protrudes from the first box portion 11. In particular, the tab 24 when in the release position protrudes from the first box portion 11 on an opposite side from an interior space where cables, junctions and/or cable trays are arranged.

The first box portion 11 and the second box potion 12 are made of plastic mouldable material, for example are made of Acrylonitrile butadiene styrene (ABS) or of Glass-filled polymer. The first box portion 11, the tab 24 and the second hinge portion 23 are obtained from a single mould preferably by injection moulding. The second box portion 12 and the first hinge portion 22 are obtained from a single mould preferably by injection moulding.

The box for cables 10 comprises a further hinge assembly axially aligned with the hinge assembly 21. In the embodiment of Figure 1 and 2, the further hinge assembly is identical to the hinge assembly 21 but it does not comprise the tab 24.

## Claims

1. Box (10) for cables comprising:
a first box portion (11) and a second box portion (12) distinct from each other that, in combination, define a closed space;
a hinge assembly (21), having a hinge axis (X) parallel to an axial direction, that hinges the first box portion (11) to the second box portion (12) so that said closed space is accessible by a relative rotation of the first box portion (11) and the second box portion (12) around said hinge axis (X);
wherein the hinge assembly (21) comprises a tab (24) integral with the first box portion (11), a first hinge portion (22) integral with the second box portion (12) and a second hinge portion (23) integral with the first box portion (11);
wherein the tab (24) comprises an appendage (32) elastically deformable having a free end (32b), an activating part (33) of the tab (24) configured for being operated by a user being provided at said free end (32b) for elastically deforming the appendage (32);
wherein the first hinge portion (22) and the second hinge portion (23) are rotatably connected to each other along the hinge axis (X) through a pintle (25);
wherein the tab (24), the first hinge portion (22) and the second hinge portion (23) succeed along the axial direction with the first hinge portion (22) positioned between the tab (24) and the second hinge portion (23);
wherein the tab (24) is movable between a rest position, wherein the tab (24) prevents the first hinge portion (22) from sliding along said axial direction relative to the second hinge portion (23) and wherein the appendage (32) is in an undeformed condition, and a release position, wherein the first hinge portion (22) is slidable along said axial direction relative to the second hinge portion (23) and wherein the appendage (32) in a elastically deformed condition;
wherein the tab (24) is configured for being moved from the rest position to the release position by operating the activating part (33);
**characterised in that** during the elastic deformation of the appendage (32), the free end (32b) substantially rotates around a deformation axis (A) lying substantially parallel to the hinge axis (X).

2. Box (10) for cables according to claim 1, wherein said first hinge portion (22) presents a predetermined extent (D1) in a radial direction; a projection in the axial direction of the radial extent (D1) of the first hinge portion (22) passes through the tab (24) in the rest position and interferes with the tab (24), and said projection in the axial direction of the radial extent (D1) of the first hinge portion (22) does not pass through the tab (24) in the release position and does not interfere with the tab (24).

3. Box (10) for cables according to any of the preceding claims, wherein the tab (24) is spaced apart from the first hinge portion (22) by a distance (D2) measured along an axial direction; the distance (D2) being comprised between 0,1 millimetres and the length (D3) of the pintle (25), measured along an axial direction, reduced by at least 0,1 millimetres.

4. Box (10) for cables according to any of the preceding claims, wherein said first hinge portion (22) comprises at least one arm (26) having a through hole (27) for rotatably receiving said pintle (25).

5. Box (10) for cables according to any of the preceding claims, wherein said second hinge portion (23) comprises a supporting frame (29) for said pintle (25); said pintle (25) being connected to said supporting frame (29).

6. Box (10) for cables according to claim 5, wherein said pintle (25) is integral with said supporting frame (29).

7. Box (10) for cables according to any of the preceding claims, wherein said first box portion (11) is a containment framework (13).

8. Box (10) for cables according to any of the preceding claims, wherein said second box portion (12) is a lid (19).

9. Box (10) for cables according to any of the preceding claims, wherein said first box portion (11), said second box portion (12) and said hinge assembly (21) are made from the same plastic material.

10. Box (10) for cables according to claim 9, wherein said containment framework (13) comprises at least two openings (17) provided on opposite walls (15) of the containment framework (13); the containment framework (13) being configured for accommodating one or more of: electric cables, optical cables, optical fibers, junctions between two or more electrical cables, junctions between two or more optical cables, junctions between two or more optical fibers, splice trays, optical splitters.

11. Box (10) for cables according to any of the preceding claims, comprising a further hinge assembly wherein the further hinge assembly lacks the relative tab (24).

12. Box (10) for cables according to any of the preceding claims, wherein the tab (24) presents a length in an axial direction that is less than a length (D3) of the pintle (25) measured along an axial direction.

13. Box (10) for cables according to any of the preceding claims, wherein during the elastic deformation of the appendage (32), the free end (32b) moves away from the hinge axis (X) along a radial direction having a first component perpendicular to the hinge axis (X) and a second component perpendicular to said first component and to the hinge axis (X).

14. Box (10) for cables according to any of the preceding claims, wherein the tab (24), when in the rest position, protrudes from the first box portion (11).

## Patentansprüche

1. Gehäuse (10) für Kabel bestehend aus:
Ein erstes Gehäuseteil (11) und ein zweites Gehäuseteil (12), die voneinander verschieden sind und in Kombination einen geschlossenen Raum bilden;
eine Scharnieranordnung (21) mit einer zu einer axialen Richtung parallelen Scharnierachse (X), an der das erste Gehäuseteil (11) an das zweite Gehäuseteil (12) eingehängt sind, so dass der geschlossene Raum durch eine relative Drehung des ersten Gehäuseteils (11) und des zweiten Gehäuseteils (12) um die Scharnierachse (X) zugänglich ist;
wobei die Scharnieranordnung (21) eine Lasche (24), die mit dem ersten Kastenabschnitt (11) einstückig ausgebildet ist, einen ersten Scharnierabschnitt (22), der mit dem zweiten Gehäuseteils (12) einstückig ausgebildet ist, und einen zweiten Scharnierabschnitt (23), der mit dem ersten Gehäuseteil (11) einstückig ausgebildet ist, umfasst,
wobei die Lasche (24) ein Anhängsel (32) umfasst, das elastisch verformbar ist und ein freies Ende (32b) aufweist, wobei ein Aktivierungsteil (33) der Lasche (24), das so konfiguriert ist, dass es von einem Benutzer betätigt werden kann, an dem freien Ende (32b) vorgesehen ist, um das Anhängsel (32) elastisch zu verformen;
wobei der erste Scharnierabschnitt (22) und der zweite Scharnierabschnitt (23) entlang der Scharnierachse (X) durch einen Zapfen (25) drehbar miteinander verbunden sind;
wobei die Lasche (24), der erste Scharnierabschnitt (22) und der zweite Scharnierabschnitt (23) entlang der axialen Richtung aufeinanderfolgen, wobei der erste Scharnierabschnitt (22) zwischen der Lasche (24) und dem zweiten Scharnierabschnitt (23) angeordnet ist;
wobei die Lasche (24) zwischen einer Ruheposition, in der die Lasche (24) den ersten Scharnierabschnitt (22) daran hindert, entlang der axialen Richtung relativ zu dem zweiten Scharnierabschnitt (23) zu gleiten, und in der sich das Anhängsel (32) in einem unverformten Zustand befindet, und einer Freigabeposition, in der der erste Scharnierabschnitt (22) entlang der axialen Richtung relativ zu dem zweiten Scharnierabschnitt (23) gleiten kann und in der sich das Anhängsel (32) in einem elastisch verformten Zustand befindet, bewegbar ist,
wobei die Lasche (24) so konfiguriert ist, dass sie durch Betätigung des Betätigungsteils (33) aus der Ruheposition in die Freigabeposition bewegt wird;
**dadurch gekennzeichnet, dass** während der elastischen Verformung des Anhängsels (32) das freie Ende (32b) im Wesentlichen um eine Verformungsachse (A) rotiert, die im Wesentlichen parallel zu der Gelenkachse (X) liegt.

2. Gehäuse (10) für Kabel nach Anspruch 1, wobei der erste Scharnierabschnitt (22) eine vorbestimmte Ausdehnung (D1) in einer radialen Richtung aufweist;
ein Vorsprung in der axialen Richtung der radialen Ausdehnung (D1) des ersten Scharnierabschnitts (22) durch die Lasche (24) in der Ruheposition hindurchgeht und mit der Lasche (24) interferiert, und der Vorsprung in der axialen Richtung der radialen Ausdehnung (D1) des ersten Scharnierabschnitts (22) nicht durch die Lasche (24) in der Freigabeposition hindurchgeht und nicht mit der Lasche (24) interferiert.

3. Gehäuse (10) für Kabel nach einem der vorhergehenden Ansprüche, wobei die Lasche (24) von dem ersten Scharnierteil (22) um einen in axialer Richtung gemessenen Abstand (D2) beabstandet ist; wobei der Abstand (D2) zwischen 0,1 mm und der in axialer Richtung gemessenen Länge (D3) des Zapfens (25) liegt, die um mindestens 0,1 mm verringert ist.

4. Gehäuse (10) für Kabel nach einem der vorhergehenden Ansprüche, wobei der erste Scharnierabschnitt (22) mindestens einen Arm (26) mit einem Durchgangsloch (27) zur drehbaren Aufnahme des Drehzapfens (25) aufweist.

5. Gehäuse (10) nach einem der vorhergehenden Ansprüche, wobei der zweite Scharnierabschnitt (23) einen Tragrahmen (29) für den Drehzapfen (25) umfasst, wobei der Drehzapfen (25) mit dem Tragrahmen (29) verbunden ist.

6. Gehäuse (10) nach Anspruch 5, wobei der Drehzapfen (25) mit dem Tragrahmen (29) fest verbunden ist.

7. Gehäuse (10) für Kabel nach einem der vorhergehenden Ansprüche, wobei das erste Gehäuseteil 11) ein Aufnahmerahmen (13) ist.

8. Gehäuse (10) für Kabel nach einem der vorhergehenden Ansprüche, wobei das zweite Gehäuseteil (12) ein Deckel (19) ist.

9. Gehäuse (10) nach einem der vorangehenden Ansprüche, wobei das erste Gehäuseteil (11), das zweite Gehäuseteils (12) und die Scharnieranordnung (21) aus dem gleichen Kunststoffmaterial hergestellt sind.

10. Gehäuse (10) für Kabel nach Anspruch 9, wobei der Aufnahmerahmen (13) mindestens zwei Öffnungen (17) umfasst, die an gegenüberliegenden Wänden (15) des Aufnahmerahmens (13) vorgesehen sind; wobei der Aufnahmerahmen (13) so konfiguriert ist, dass er eines oder mehrere der folgenden Elemente aufnehmen kann: Elektrische Kabel, optische Kabel, optische Fasern, Verbindungsstellen zwischen zwei oder mehreren elektrischen Kabeln, Verbindungsstellen zwischen zwei oder mehreren optischen Kabeln, Verbindungsstellen zwischen zwei oder mehreren optischen Fasern, Spleißböden, optische Splitter.

11. Gehäuse (10) für Kabel nach einem der vorhergehenden Ansprüche, umfassend eine weitere Scharnieranordnung, wobei der weiteren Scharnieranordnung die entsprechende Lasche (24) fehlt.

12. Gehäuse (10) nach einem der vorhergehenden Ansprüche, wobei die Lasche (24) in axialer Richtung eine Länge aufweist, die kleiner ist als eine in axialer Richtung gemessene Länge (D3) des Drehzapfens (25).

13. Gehäuse (10) für Kabel nach einem der vorhergehenden Ansprüche, wobei sich das freie Ende (32b) während der elastischen Verformung des Anhängsels (32) von der Scharnierachse (X) entlang einer radialen Richtung wegbewegt, die eine erste Komponente senkrecht zur Scharnierachse (X) und eine zweite Komponente senkrecht zu dieser ersten Komponente und zur Scharnierachse (X) aufweist.

14. Gehäuse (10) für Kabel nach einem der vorhergehenden Ansprüche, wobei die Lasche (24) in der Ruhestellung aus dem ersten Gehäuseteils (11) herausragt.

## Revendications

1. Boîte (10) pour câbles comprenant :
une première partie de boîte (11) et une deuxième partie de boîte (12) distinctes l'une de l'autre qui, en combinaison, définissent un espace fermé ;
un ensemble charnière (21), ayant un axe de charnière (X) parallèle à une direction axiale, qui articule la première partie de boîte (11) sur la deuxième partie de boîte (12) de sorte que ledit espace fermé est accessible par une rotation relative de la première partie de boîte (11) et la deuxième partie de boîte (12) autour dudit axe de charnière (X) ;
dans laquelle l'ensemble charnière (21) comprend une languette (24) faisant partie intégrante de la première partie de boîte (11), une première partie de charnière (22) faisant partie intégrante de la deuxième partie de boîte (12) et une deuxième partie de charnière (23) faisant partie intégrante de la première partie de boîte (11) ;
dans laquelle la languette (24) comprend un appendice (32) élastiquement déformable ayant une extrémité libre (32b), une partie d'activation (33) de la languette (24) configurée pour être actionnée par un utilisateur étant disposée au niveau de ladite extrémité libre (32b) pour déformer élastiquement l'appendice (32) ;
dans laquelle la première partie de charnière (22) et la deuxième partie de charnière (23) sont reliées de manière rotative l'une à l'autre le long de l'axe de charnière (X) par l'intermédiaire d'un pivot (25) ;
dans laquelle la languette (24), la première partie de charnière (22) et la deuxième partie de charnière (23) se succèdent le long de la direction axiale avec la première partie de charnière (22) positionnée entre la languette (24) et la deuxième partie de charnière (23) ;
dans laquelle la languette (24) est mobile entre une position de repos, dans laquelle la languette (24) empêche la première partie de charnière (22) de coulisser le long de ladite direction axiale par rapport à la deuxième partie de charnière (23) et dans laquelle l'appendice (32) est dans un état non déformé, et une position de libération, dans laquelle la première partie de charnière (22) est coulissante le long de ladite direction axiale par rapport à la deuxième partie de charnière (23) et dans laquelle l'appendice (32) est dans un état élastiquement déformé ;
dans laquelle la languette (24) est configurée pour être déplacée de la position de repos à la position de libération en actionnant la partie d'activation (33) ;
**caractérisée en ce que**
pendant la déformation élastique de l'appendice (32), l'extrémité libre (32b) tourne sensiblement autour d'un axe de déformation (A) s'étendant sensiblement parallèlement à l'axe de charnière (X).

2. Boîte (10) pour câbles selon la revendication 1, dans laquelle ladite première partie de charnière (22) présente une étendue prédéterminée (D1) dans une direction radiale ; une saillie dans la direction axiale de l'étendue radiale (D1) de la première partie de charnière (22) traverse la languette (24) dans la position de repos et interfère avec la languette (24), et ladite saillie dans la direction axiale de l'étendue radiale (D1) de la première partie de charnière (22) ne traverse pas la languette (24) dans la position de libération et n'interfère pas avec la languette (24).

3. Boîte (10) pour câbles selon l'une quelconque des revendications précédentes, dans laquelle la languette (24) est espacée de la première partie de charnière (22) d'une distance (D2) mesurée le long d'une direction axiale ; la distance (D2) étant comprise entre 0,1 millimètre et la longueur (D3) du pivot (25), mesurée le long d'une direction axiale, réduite d'au moins 0,1 millimètre.

4. Boîte (10) pour câbles selon l'une quelconque des revendications précédentes, dans laquelle ladite première partie de charnière (22) comprend au moins un bras (26) ayant un trou traversant (27) pour recevoir de manière rotative ledit pivot (25).

5. Boîte (10) pour câbles selon l'une quelconque des revendications précédentes, dans laquelle ladite deuxième partie de charnière (23) comprend un cadre de support (29) pour ledit pivot (25) ; ledit pivot (25) étant relié audit cadre de support (29).

6. Boîte (10) pour câbles selon la revendication 5, dans laquelle ledit pivot (25) est partie intégrante dudit cadre de support (29).

7. Boîte (10) pour câbles selon l'une quelconque des revendications précédentes, dans laquelle ladite première partie de boîte (11) est une ossature de confinement (13).

8. Boîte (10) pour câbles selon l'une quelconque des revendications précédentes, dans laquelle ladite deuxième partie de boîte (12) est un couvercle (19).

9. Boîte (10) pour câbles selon l'une quelconque des revendications précédentes, dans laquelle ladite première partie de boîte (11), ladite deuxième partie de boîte (12) et ledit ensemble charnière (21) sont constitués du même matériau plastique.

10. Boîte (10) pour câbles selon la revendication 9, dans laquelle ladite ossature de confinement (13) comprend au moins deux ouvertures (17) disposées sur des parois opposées (15) de l'ossature de confinement (13) ; l'ossature de confinement (13) étant configurée pour loger un ou plusieurs éléments parmi : des câbles électriques, des câbles optiques, des fibres optiques, des jonctions entre deux câbles électriques ou plus, des jonctions entre deux câbles optiques ou plus, des jonctions entre deux fibres optiques ou plus, des plateaux d'épissure, des répartiteurs optiques.

11. Boîte (10) pour câbles selon l'une quelconque des revendications précédentes, comprenant un autre ensemble charnière, dans laquelle l'autre ensemble charnière est dépourvu de la languette respective (24).

12. Boîte (10) pour câbles selon l'une quelconque des revendications précédentes, dans laquelle la languette (24) présente une longueur dans une direction axiale qui est inférieure à une longueur (D3) du pivot (25) mesurée le long d'une direction axiale.

13. Boîte (10) pour câbles selon l'une quelconque des revendications précédentes, dans laquelle lors de la déformation élastique de l'appendice (32), l'extrémité libre (32b) s'éloigne de l'axe de charnière (X) le long d'une direction radiale ayant une première composante perpendiculaire à l'axe de charnière (X) et une deuxième composante perpendiculaire à ladite première composante et à l'axe de charnière (X).

14. Boîte (10) pour câbles selon l'une quelconque des revendications précédentes, dans laquelle la languette (24), lorsqu'elle est en position de repos, fait saillie depuis la première partie de boîte (11).
